# EUROPÄISCHE PATENTSCHRIFT

(11) **EP 1 500 067 B1**
(45) Veröffentlichungstag und Bekanntmachung des Hinweises auf die Patenterteilung: **27.09.2006**
(21) Anmeldenummer: 03729844.5
(22) Anmeldetag: 16.04.2003
(51) Int. Cl.: G09B 23/28

(54) **VERFAHREN UND VORRICHTUNG ZUM ERLERNEN UND TRAINIEREN ZAHNÄRZTLICHER BEHANDLUNGSMETHODEN**
METHOD AND DEVICE FOR LEARNING AND TRAINING DENTAL TREATMENT TECHNIQUES
PROCEDE ET DISPOSITIF POUR ENSEIGNER DES METHODES DE TRAITEMENT DENTAIRE ET PERMETTRE A DES PERSONNES DE S'EXERCER A LES PRATIQUER

(30) Priorität: 19.04.2002 DE 10217630
(43) Veröffentlichungstag der Anmeldung: 26.01.2005
(73) Patentinhaber: Riener, Robert, 85591 Vaterstetten (DE); Burgkart, Rainer, 80469 München (DE)
(72) Erfinder: Riener, Robert, 85591 Vaterstetten (DE); Burgkart, Rainer, 80469 München (DE)
(74) Vertreter: Müller, Thomas
(86) Internationale Anmeldenummer: PCT/DE2003/001283
(87) Internationale Veröffentlichungsnummer: WO 2003/090179

(56) Entgegenhaltungen:
- WO-A-02/37453
- WO-A-98/15234
- DE-A- 10 017 119
- FR-A- 2 808 366
- US-A- 5 688 118

## Beschreibung

Die Erfindung betrifft eine Vorrichtung zum Erlernen und Trainieren zahnärztlicher Behandlungsmethoden, bei denen vorzugsweise mittels verschiedener Werkzeuge eine Kraft auf einen Zahn aufgebracht wird, um diesen zu untersuchen oder zu behandeln.

Lehr - und Übungsgeräte zur Simulation und Übung zahnärztlich-klinischer Arbeitsgänge sind aus dem Stand der Technik bekannt. So wird in der DE 39 41 332 ein solches Lehr - und Übungsgerät beschrieben, bestehend aus einem Schrank mit einem klappbaren Phantomkopf und diversen Schubläden zur Unterbringung von Werkzeugen. In dem japanische Dokument JP 05204300A ist ein Kiefernmodell mit künstlichen Zähnen beschrieben. Diese Zähne bestehen aus Materialien, die ähnliche mechanische Eigenschaften aufweisen wie natürliche Zähne. Die künstlichen Zähne sind auswechselbar befestigt, z. B. durch eine Schraubverbindung und werden nach einer Behandlungsübung, z. B. Bohren, durch einen neuen Kunstzahn ersetzt.

In der WO 98/15234 ist ein Verfahren zum Üben von zahnärztlichen Diagnose- und Behandlungsverfahren beschrieben. Dazu wird eine Vorrichtung nach Fig. 15 verwendet, deren Gebrauch in Fig. 12 gezeigt ist. Die räumliche Lage des Werkzeugkopfes wird mittels mechanischer Gestänge in Verbindung mit diversen Meßsystemen erfaßt. Diese Vorrichtung ist relativ sperrig und ermöglicht keine natürliche Handhaltung.

In der DE 100 17 119 ist eine Apparatur zur Messung der Kraftwirkung an Zähnen, Zahnmodellen und/oder Implantaten beschrieben. Diese Vorrichtung ist zur Messung von Kräften am Zahn prinzipiell geeignet, aber technisch sehr aufwendig und daher auch teuer.

In der US 5 688 118 A wird ein System zur Simulation von zahnärztlichen Behandlungsmethoden beschrieben, das in verschiedenen Konfigurationen benutzt werden kann.

In einer Minimalkonfiguration weist das System ein zahnärztliches Handstück mit einem Bohrer auf, wobei an dem Handstück ein Sensor angeordnet ist. Durch eine Reihe von Maßnahmen werden Informationen über die räumliche Lage des Bohrers generiert. Durch zusätzliche Sensoren soll der Einsatzbereich vergrößert werden. Dieses System ist sehr aufwendig und teuer.

In der FR 2 808 366 A wird eine Vorrichtung beschrieben, mit der zahntechnische Behandlungen, wie z. B. Bohren simuliert werden können. Wie in der WO 98/15234 ist das Werkzeug an einem sperrigen mechanischen Gelenksystem aufgehängt, das ein Arbeiten unter realen Verhältnissen nicht zuläßt.

In der WO 02/37453 A1 wird ein Verfahren und eine Vorrichtung zur Messung von Kräften beschrieben, die auf einen Phantomkörper aufgebracht werden. In Fig. 6 wird gezeigt, daß dazu ein kompliziertes System von verschiedenen Sensoren erforderlich ist, die zudem auch noch räumlich voneinander getrennt angeordnet sein müssen. Insbesondere ist zu erwähnen, daß Sensoren vorgesehen sind, die lediglich die Größe einer Kraft messen und andere Sensoren feststellen, wo die Kraft angreift. Dieses Sensorsystem ist auf zahnärztliche Anwendungen nur sehr schwer übertragbar.

Vorstehend genannte Lehr- und Übungsgeräte sind nur grundsätzlich geeignet, elementare zahnärztliche Arbeitsgänge zu erlernen. Sie sind relativ kompliziert und teuer.

Es ist daher die Aufgabe der Erfindung, für die Ausbildung von Zahnärzten eine geeignete Vorrichtung bereitzustellen, mit deren Hilfe kraftdeterminierte Arbeitsgänge am Zahn oder am Kiefer mit oder ohne Werkzeuge besser erlernt und trainiert werden können.

Diese Aufgabe wird mit einer Vorrichtung nach Anspruch 1 gelöst. Erfindungsgemäß ist ein Unterkiefermodell mit einem einzigen darunter angeordneten 6-Komponenten-Kraft-Momentensensor gekoppelt, welcher die auf einen Zahn aufgebrachte Kräfte in entsprechende elektrische Meßsignale umwandelt. Diese Meßsignale werden einer Datenverarbeitungsvorrichtung zugeführt, die einen Datenspeicher aufweist, in dem eine Vielzahl von Referenz-Kraft-Zeitverläufe gespeichert sind. Diese unterschiedlichen Referenz-Kraft-Zeit-Verläufe entsprechen dem Signalmuster von Zahnbehandlungsschritten, die von einem Spezialisten an der Vorrichtung ausgeführt worden sind. Dieses als Teaching bezeichnete Verfahren ist hinreichend bekannt und muß daher nicht näher erläutert werden. Die Meßwerte werden in Form von Wertetafeln gespeichert. Es ist weiterhin ein Steuerprogramm vorgesehen, welches die Datenverarbeitungsvorrichtung so steuert, daß ein ausgewählter Referenz-Kraft-Zeitverlauf und der aktuelle Kraft-Zeit-Verlauf der simulierten Zahnbehandlung auf einem optischen Display dargestellt werden. Die auf den Zahn aufgebrachten Kräfte und der dazugehörige Zeitverlauf werden mittels eines Korrelationsverfahren mit den gespeicherten Meßwerten verglichen, wobei festgestellt wird, ob eine vorgegebene Korrelation erzielt wurde.

So entsteht für eine spezielle Handlung, z. B. das Abtasten des Zahnes mit einer Nadel oder das Bohren eines Loches, ein charakteristischer Referenz-Kraft-Zeit-Verlauf. Im Datenspeicher der Datenverarbeitungsvorrichtung sind eine Vielzahl von Referenz-Kraft-Zeitverläufen gespeichert, welche die unterschiedlichsten Untersuchungs- und Bearbeitungsschritte einer Zahnbehandlung abbilden. Die von einer auszubildenden Person, nachfolgend Student genannt, während der Untersuchung oder der Behandlung erzeugten Kraft-Zeitverläufe werden mit den Referenz-Kraft-Zeitverläufen verglichen und objektiv bewertet. Zur Bewertung des vom Studenten bei seiner Übung erzeugten Kraft-Zeit-Verlaufs wird dieser zusammen mit dem Referenz-Kraft-Zeitverlauf auf einem Bildschirm optisch vergleichbar dargestellt. Dazu können die aus dem Stand der Technik bekannten Visualisierungsverfiahren eingesetzt werden, wie z. B. die Überlagerung von zwei Kurven, deren Abweichungen voneinander als farbige Fläche "dargestellt werden. Eine objektive Bewertung erfolgt durch die Ermittlung eines Korrelationskoeffizienten zwischen den Kurven, wobei die Größe des Korrelationskoeffizienten ein Maß dafür ist, in wieweit der Student die handwerkliche Fertigkeit des ausgebildeten Zahnarztes erreicht hat. Es ist jedoch auch möglich, die Kraft-Zeit-Verläufe als Computeranimationen darzustellen. So kann z. B. das Aufbohren eines Zahnes als realitätsnahe Computeranimation auf dem Bildschirm dargestellt werden, um dem Studenten die Möglichkeit zu geben, die von ihm selbst erzeugte Bohrung mit der fachmännisch erzeugten Bohrung zu vergleichen. Auch hier werden Korrelationsmethoden eingesetzt, um einen Grad der Übereinstimmung zwischen dem abgespeicherten und dem aktuellen Kraft-Zeitverlauf oder den daraus ableitbaren Größen, wie z. B. Bewegungen oder Kraftangriffspunkte, zu ermitteln.

Ergänzend sei erwähnt, daß mit aus dem Stand der Technik bekannten Verfahren der visuellen Computeranimation eine Vielzahl von didaktisch wertvollen Zusatzeffekten erzeugbar sind. So können z. B. bei einer in der Realität blutend ablaufenden Zahnbehandlung Blut und Speichel simuliert und mit in die Computersimulation aufgenommen werden, um eine möglichst realistische Simulation der Zahnbehandlung darzustellen.

Im einzelnen werden folgende Schritte ausgeführt:
- Auswählen eines Referenz-Kraft-Zeitverlaufs, der einer zu erlernenden oder zu trainierenden Zahnbehandlung, z. B. die Vorbereitung eines Backenzahnes für eine Füllung entspricht. Dazu wird dem Studenten mitgeteilt, daß an einer vorbestimmten Stelle des Zahnes ein Loch mit einer vorbestimmten Form und Größe zu bohren ist. Der Referenz-Kraft-Zeitverlauf bzw. die dazu angepaßte Computeranimation wird auf dem Bildschirm eingeblendet.
- Start der simulierten Zahnbehandlung, d. h. das Werkzeug wird wie ein herkömmlicher Bohrer auf den Zahn aufgesetzt und geführt,
- Messen der auf den Zahn aufgebrachten Kräfte und Ermitteln von Betrag und Richtung über der Zeit. Mittels aus der Meßwertanalyse bekannter Korrelationsverfahren wird ein Vergleich der gespeicherten Meßwerte mit den aktuellen Meßwerten vorgenommen und festgestellt, ob eine vorgegebene Korrelation erzielt wurde.

Aus den Kraftkomponenten der gemessenen Kräfte und aus den dazugehörigen gemessenen Momenten werden die Raumkoordinaten des Kraftangriffspunktes des Werkzeuges berechnet, so daß ein Bewegungs-Zeitverlauf des Werkzeug-Angriffspunktes ableitbar und darstellbar ist. Dieser aktuelle Bewegungszeitverlauf wird mit dem gespeicherten Referenz-Bewegungs-Zeitverlauf mittels Korrelationsverfahren verglichen und festgestellt, ob eine vorbestimmte Bewegungs-Zeit-Korrelation erreicht wurde.

Nach Anspruch 2 weist die Vorrichtung eine akustische Ausgabevorrichtung und einen Datenspeicher auf, in dem eine Vielzahl von Sound-Samples abrufbar gespeichert sind. Wenn bei der Simulation der Zahnbehandlung z. B. festgestellt wird, daß ein Behandlungsabschnitt erfahrungsgemäß Schmerzen verursacht, werden Schmerzlaute zugespielt. Diese Weiterentwicklung der Vorrichtung verbessert den Lerneffekt.

Nach Anspruch 3 ist an dem Werkzeug zur Zahnbehandlung wenigstens eine Kraftmeßvorrichtung angeordnet und so ausgebildet, um die mit dem Werkzeug auf den Zahn aufgebrachten Kräfte zu messen. Diese Meßwerte werden einem Steuer- und Korrekturprogramm zugeführt, welches eine Meßwertkorrektur der am Zahn oder am Kiefer gemessenen Kräfte berechnet.

Es ist auch möglich, einen Handlungsablauf, der bisher noch nicht bekannt war, d. h. der lediglich theoretisch als optimal angesehen wird oder im Rahmen einer Optimierungsrechnung ermittelt wurde, mittels der Erfindung einem Auszubildenden oder auch einem Spezialisten zu vermitteln.

Die Erfindung wird nachfolgend an Hand eines Ausführungsbeispiels und einer schematischen Zeichnung näher erläutert:

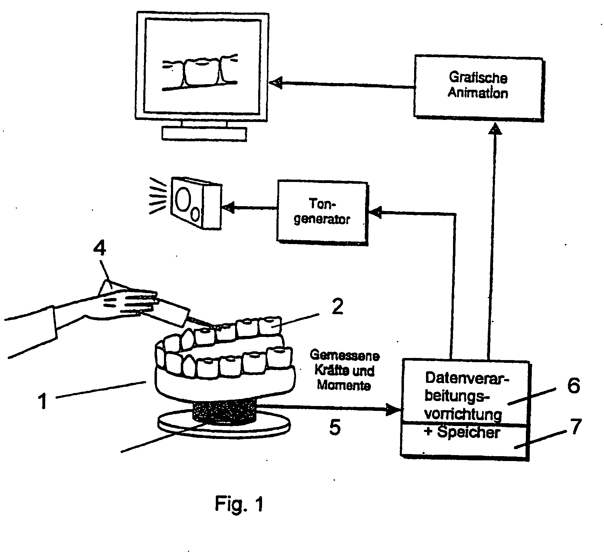

Fig. 1 zeigt ein schematisches Blockschaltbild der Erfindung.

Ein Unterkiefermodell 1 mit künstlichen Zähnen 2 ist auf einem 6-Komponenten-Kraft-Moment-Sensor 3 befestigt. Wenn ein Werkzeug 4 einen Zahn 2 berührt, um diesen abzutasten oder zu bearbeiten, werden von dem 6-Komponenten-Kraft-Moment-Sensor 3 Kraft- und Momenten-Meßsignale 5 generiert und an eine Datenverarbeitungsvorrichtung 6 gesendet. Der zeitliche Verlauf der Kraft- und Momenten-Meßsignale 5, nachfolgend als Signalmuster 5 bezeichnet, ist charakteristisch für einen bestimmten Behandlungsschritt, wie z. B. das Abtasten eines Zahnes 2 nach kariösen Stellen oder das Aufbohren eines Loches. Im Speicher 7 der Datenverarbeitungsanlage sind eine Vielzahl derartiger Signalmuster 5 gespeichert, nachfolgend als Referenzsignalmuster bezeichnet. Ein Referenzsignalmuster 5 wird erzeugt, in dem ein Spezialist einen bestimmten Behandlungsschritt durchführt, d. h. es erfolgt ein Teaching, wie es z. B. auch von Farbspritzrobotern bekannt ist, denen von Hand die optimale Führung der Farbpistole gelehrt wird. Es ist zu beachten, daß unterschiedliche Zähne 2 bei dem gleichen Behandlungsschritt unterschiedliche Signalmuster 5 aufweisen, d. h. die Signalmuster 5 unterscheiden sich hinsichtlich des speziellen Zahnes 2 und der Art der Behandlung.

Im Speicher der Datenverarbeitungsanlage sind weiterhin Sound-Samples gespeichert. Dabei es handelt sich um charakteristische Geräusche, die bei einem bestimmten Behandlungsschritt entstehen. Im vorliegenden Beispiel wird ein Klopf- und Kratzgeräusch eingespielt. Wenn ein Loch zu bohren ist, wird dementsprechend ein typisches Bohrgeräusch eingespielt, das sich in Abhängigkeit von der auf den Zahn aufgebrachten Kraft verändern kann.

Wenn ein Student beginnt, den ausgewählten Zahn 2 nach einem ausgewählten Behandlungsschritt zu behandeln, d. h. wenn der betreffende Zahn 2 mit dem Werkzeug 4 berührt wird, startet das Verfahren, und das ..aktuelle Signalmuster wird auf einem Bildschirm oder auch auf einer halbdurchlässigen Datenbrille visualisiert. Gleichzeitig sieht der Student das optimale ReferenzSignalmuster des Spezialisten. Er wird versuchen, seine Arbeitsweise so zu verändern, daß das von ihm erzeugte Signalmuster dem Signalmuster des Spezialisten ähnlich wird. Wenn der Behandlungsschritt abgeschlossen ist, wird durch eine Korrelationsrechnung der Grad der Übereinstimmung objektiv bestimmt. Folgende Aussagen zur Bewertung der studentischen Leistung sind an Hand des Signalmustervergleichs möglich:
- Übereinstimmung des Endergebnisses:
   Es kann eine quantitative Bewertung in Form einer Prozentzahl ausgegeben werden, die z. B. aussagt, daß der Student 70% der Gesamtleistung des Spezialisten erreicht hat. Diese Aussage bezieht sich lediglich auf das Arbeitsergebnis und berücksichtigt nicht die Zeit, in der das Arbeitsergebnis erbracht wurde.
- Übereinstimmung in der Reihenfolge einzelner Teilabschnitte:
   Es kann ausgegeben werden, ob der Student die einzelnen Teilabschnitte in der richtigen Reihenfolge abgearbeitet hat.
- Bewertung der Qualität der Teilabschnitte:
   Es kann ausgegeben werden, in welcher Qualität der Student die einzelnen Teilabschnitte bearbeitet hat.
- Zeitliche Übereinstimmung bis zum Erreichen des Endergebnisses
   Es kann ausgegeben werden, ob der Student die einzelnen Teilabschnitte in einer adäquaten Gesamtzeit - im Vergleich zum Spezialisten ― ausgeführt hat.
- Zeitliche Übereinstimmung der einzelnen Teilabschnitte.
   Es kann ausgegeben werden, ob der Student die einzelnen Teilabschnitte im adäquaten Zeitverhältnis zueinander ausgeführt hat.

## Patentansprüche

1. Vorrichtung zum Erlernen und Trainieren zahnärztlicher Behandlungsmethoden, bei denen mittels eines Werkzeuges **(4)** oder von Hand auf einen in einem Unterkiefermodell (1) gehaltenen Zahn **(2)** Kräfte aufgebracht werden, um den Zahn **(2)** zu untersuchen oder zu bearbeiten, wobei die Kräfte mittels
- einer Meßvorrichtung in elektrische Meßsignale **(5)** umgewandelt werden und die Meßvorrichtung ein unterhalb des Unterkiefermodells **(1)** befestigter einziger Sensor ist, der als 6-Komponenten-Kraft-Momenten-Sensor **(3)** ausgebildet ist und die Meßsignale **(5)**
- einer Datenverarbeitungsvorrichtung **(6)** zugeführt werden, in der die Meßsignale **(5)** als Kräfte nach Betrag und Richtung abbildbar sind, und die Datenverarbeitungsvorrichtung **(6)** weiterhin
- einen Datenspeicher **(7)** aufweist, in dem
- eine Vielzahl Referenz-Kraft-Zeitverläufe unterschiedlicher Zahnbehandlungsschritte als Wertetafel abrufbar gespeichert sind und
- ein Programm vorgesehen ist, das die Datenverarbeitungsvorrichtung **(6)** so steuert, daß ein ausgewählter Referenz-Kraft-Zeitverlauf und der aktuelle Kraft-Zeitverlauf der simulierten Zahnbehandlung auf einem optischen Display darstellbar sind.

2. Vorrichtung nach Anspruch 1, **dadurch gekennzeichnet, daß** eine akustisches Ausgabevorrichtung vorgesehen ist und in dem Datenspeicher **(7)** eine Vielzahl von Sound-Samples gespeichert sind, wobei mittels eines Programms in Abhängigkeit vom aktuelle Kraft-Zeitverlauf der simulierten Zahnbehandlung ein dazugehöriges Sound-Sample abspielbar ist.

3. Vorrichtung nach den Ansprüche 1 oder 2, **dadurch gekennzeichnet, daß** an dem Werkzeug **(4)** wenigstens eine Kraftmeßvorrichtung **(8)** angeordnet und so ausgebildet ist, um die mit dem Werkzeug **(4)** aufgebrachte Kraft zu messen und weiterhin ein Steuer- und Korrekturprogramm vorgesehen ist, welches eine Meßwertkorrektur der am Zahn **(2)** oder am Kiefer **(1)** gemessenen Kräfte berechnet.

## Claims

1. Apparatus for learning and training in dental treatment methods, wherein forces can be exerted on a tooth (2) secured in a model of a lower jaw (1), using a tool (4) or manually, for examining or working on the tooth (2), wherein the forces are
- converted into electrical measuring signals (5) by means of a measuring device, and the measuring device is a single sensor fixed underneath the model of the lower jaw (1), constructed as a six-component force-moment sensor (3) and wherein the measuring signals (5)
- are fed to a data processor (6) in which the measuring signals (5) can be imaged as forces according to their magnitude and direction, and the data processor (6) further comprises
- a data memory (7) in which
- a plurality of reference-force-time curves of different dental treatment steps can be stored as a table of values that can be called up and
- a program is provided which controls the data processor (6) such that a selected reference-force-time curve and the actual force-time curve of the simulated dental treatment can be represented on an optical display.

2. Apparatus according to claim 1, **characterised in that** an acoustic emitter is provided and a plurality of sound samples are stored in the data memory (7), wherein an associated sound sample can be played by means of a program depending on the actual force-time curve of the simulated dental treatment.

3. Apparatus according to claim 1 or 2, **characterised in that** at least one force measuring device (8) is arranged on the tool (4) and designed so as to measure the force exerted using the tool (4) and furthermore, a control and correction program is provided which calculates a correction to the measured value of the forces measured on the tooth (2) or on the jaw (1).

## Revendications

1. Dispositif pour enseigner des méthodes de traitement dentaire pour permettre à des personnes de s'exercer à les pratiquer, dans lesquelles au moyen d'un outil (4) ou à la main, des forces sont exercées sur une dent (2) maintenue dans un modèle de mâchoire inférieure (1) afin d'examiner ou de traiter la dent,
- les forces étant converties en signaux de mesure électriques (5) au moyen d'un dispositif de mesure et le dispositif de mesure étant un capteur unique fixé sous le modèle de mâchoire inférieure (1) qui est conçu comme capteur de couples de forces à 6 composants (3) et les signaux de mesure (5)
- étant dirigés vers un dispositif de traitement des données (6) dans lequel les signaux de mesure (5) peuvent être représentés comme des forces selon l'amplitude et la direction, et le dispositif de traitement des données (6)
- présentant en outre une mémoire de données (7) dans laquelle
- une pluralité de temps écoulé-force-référence de diverses étapes du traitement dentaire peuvent être enregistrés pour être affichés dans un tableau de valeurs et
- un programme étant prévu lequel commande le dispositif de traitement des données (6) de manière à ce qu'un temps écoulé-force-référence sélectionné et le temps écoulé-force actuel du traitement dentaire simulé puissent être représentés sur un écran optique.

2. Dispositif selon la revendication 1, **caractérisé en ce qu'**un dispositif de sortie acoustique est prévu, et, dans la mémoire de données (7), une pluralité d'échantillons sonores sont enregistrés, un échantillon sonore correspondant pouvant être reproduit au moyen d'un programme en fonction du temps écoulé-force actuel du traitement dentaire simulé.

3. Dispositif selon la revendication 1 ou 2, **caractérisé en ce que** sur l'outil (4) au moins un dispositif de mesure de la force (8) est placé et conçu de manière à mesurer la force exercée par l'outil (4) et un programme de commande et de correction est en outre prévu, lequel calcule une correction de valeur mesurée des forces mesurées sur la dent (2) ou la mâchoire (1).
